Europäisches Patentamt

European Patent Office

Office européen des brevets

(19)

(11) Veröffentlichungsnummer: **0 121 076**
**B1**

(12) **EUROPÄISCHE PATENTSCHRIFT**

(45) Veröffentlichungstag der Patentschrift:
**24.06.87**

(21) Anmeldenummer: **84101765.0**

(22) Anmeldetag: **21.02.84**

(51) Int. Cl.⁴: **A 01 N  47/12,** A 01 N  37/06,
A 01 N  37/02, A 01 N  33/18,
A 01 N  31/02 // (A01N47/12,
37:06, 37:02, 33:18,
31:02),(A01N37/06, 37:02, 33:18,
31:02),(A01N37/02, 33:18,
31:02),(A01N33/18, 31:02)

(54) **Verfahren und Mittel zur Gewinnung unkrautfreier Torfprodukte.**

(30) Priorität: **04.03.83  DE 3307768**

(43) Veröffentlichungstag der Anmeldung:
**10.10.84 Patentblatt 84/41**

(45) Bekanntmachung des Hinweises auf die Patenterteilung:
**24.06.87 Patentblatt 87/26**

(84) Benannte Vertragsstaaten:
**AT BE CH DE FR GB IT LI LU NL SE**

(56) Entgegenhaltungen:
**DE - A - 1 812 793**
**US - A - 3 034 881**

**J.D. FRYER: Weed control Handbook II, pages 220, 285
1978**

(73) Patentinhaber: **Torfstreuverband GmbH, Bloherfelder
Strasse 39, D-2900 Oldenburg (DE)**

(72) Erfinder: **Reeker, Richard, Altburgstrasse 2,
D-2900 Oldenburg (DE)**
Erfinder: **Springer, Edwin, Dr., Junkerbült 27, D-2903 Bad
Zwischenahn (DE)**

(74) Vertreter: **Bolte, Erich, Dipl.-Ing., c/o Meissner & Bolte
Patentanwälte Hollerallee 73, D-2800 Bremen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf Verfahren und Mittel zur Gewinnung unkrautfreier Torfprodukte.

Um Torf abbauen zu können, muss die Lagerstätte des Torfs, das Moor, stark entwässert werden, wodurch Lebensbedingungen für typische Moorfolgepflanzen wie Sauerampfer (Rumex acetosella) und Honiggras (Holcus mollis) entstehen. Diese beiden Pflanzenarten – aber auch andere Moorfolgepflanzen –stören den Gärtner, weil sie in seinen Kulturen die angebauten Pflanzen oft überwuchern. Die Beseitigung zum Beispiel durch Jäten der Pflanzen führt zu erheblichem Zeit- und damit Kostenaufwand.

Der Versuch, unkrautfreie Torfprodukte zu gewinnen, erfolgt seit Jahrzehnten durch verschiedene Massnahmen, die aber das immer grösser werdende Problem nicht haben lösen können. Es wurde versucht, mit sogenannten Vorauflaufmitteln, das sind Unkrautbekämpfungsmittel mit kurzer Karenzzeit, wie sie der Landwirt vor der Aussaat der Kulturpflanzen anwendet, das Problem zu lösen. Es gelang nicht, weil sich resistente Arten dieser Moorfolgepflanzen herausbildeten und weil Rückstände der eingesetzten Mittel beim Gärtner zu Pflanzenschäden führten.

Weiter wurde versucht, die Samenbildung zu verhindern, indem die Pflanzen gemäht wurden noch bevor sich Fruchtstände herausbildeten. Auch dieses kostspielige Verfahren war wenig erfolgreich, weil ungewollt Pflanzenarten mit sehr niedrigen Blütenständen herausselektriert wurden, die nicht gemäht werden konnten. Ausserdem führte das Hereinwandern von Samen durch Wind, Tiere und Mensch zu einer immer neuen Ausbildung dieser Moorfolgepflanzen.

Die nicht veröffentlichte DE-OS 3 220 233 beschreibt die Behandlung von humusreichen Düngemitteln bzw. Bodenverbesserungsmitteln, wie z.B. Torfmischdünger zur Hemmung des Wachstums von Mikroorganismen durch Zusatz von Propionsäure.

Die US-PS 3 034 881 beschreibt eine Bodenbehandlung zur Bekämpfung von Unkräutern mit Propargylalkohol.

In «Weed Control Handbook», Vol. II, Seiten 220 und 285, Blackwell (London) 1978 ist angegeben, dass Honiggras mit Na-2,2-dichlorpropionat bekämpft werden kann.

Na-2,2-dichlorpropionat ist schwierig herzustellen und wirkt nicht gegen Sauerampfer.

Aufgabe der Erfindung ist daher die Bereitstellung eines einfach durchzuführenden Verfahrens und eines wirksamen Mittels zur Gewinnung unkrautfreier Torfprodukte, die insbesondere frei von Sauerampfer und Honiggras sind.

Diese Aufgabe wird durch das in den Patentansprüchen beschriebene Verfahren und Mittel, die den Gegenstand der Erfindung definieren, gelöst.

Im Rahmen der Erfindung hat es sich gezeigt, dass die Vernichtung der aus dem Moor stammenden Samen durch Zumischen von Allylalkohol und ggfls. zusätzlich von Propionsäure und/oder Acrylsäure erzielt werden kann. Dabei hat es sich als besonders vorteilhaft erwiesen, die Vernichtung der Samen im geschlossenen System, beispielsweise in kunststoffverpackten Ballen oder Säcken durchzuführen. Hierzu ist es günstig, die genannten Verbindungen dem Torf unmittelbar vor dem Verpacken zuzumischen, wobei man sich üblicher hochleistungsfähiger Torfabfüllanlagen bedienen kann. Zwischen Beimischung und Verpackung liegen beispielsweise nur wenige Sekunden.

Die zugesetzte Menge des Allylalkohols ist sehr gering und liegt beispielsweise bei 0,0005 bis 0,03 ml je Liter losem Torf, bevorzugt bei 0,001 bis 0,02 ml je Liter losem Torf.

Allylalkohol kann allein beispielsweise in den vorstehend angegebenen Mengen verwendet werden. Es hat sich gezeigt, dass sich Allylalkohol besonders bei der Bekämpfung von Sauerampfer bewährte. Überraschenderweise wurde gefunden, dass der Zusatz von Acrylsäure und/oder Propionsäure zum Allylalkohol dessen Wirkung verstärkt und die Wirkung auf Moorpflanzen allgemein verbreitert. Insbesondere wird die Einwirkung auf das Honiggras deutlich verbessert. Diese Verbesserung geht aus der folgenden Tabelle hervor, in der die mittlere Stückzahl von Sauerampfer- und Honiggraspflanzen bzw. das mittlere Gewicht je Pflanze bei Behandlung mit Allylalkohol oder Kombinationen von Allylalkohol mit Propionsäure und Acrylsäure in Prozent der unbehandelten Kontrollproben angegeben ist:

Mittlere Stückzahl der Pflanzen bzw. mittleres Gewicht je Pflanze in Prozent der unbehandelten Kontrollproben.

| Mittel | Sauerampfer | | Honiggras | |
|---|---|---|---|---|
| | Stück (%) | Gewicht g/Pfl. (%) | Stück (%) | Gewicht g/Pfl. (%) |
| Allylalkohol | 31 | 33 | 92 | 83 |
| Allylalkohol + Propionsäure + Acrylsäure | 37 | 17 | 81 | 56 |

Aus der Tabelle ist ersichtlich, dass durch Zugabe von Allylalkohol die Zahl der Sauerampferpflanzen um etwa ein Drittel zurückging und das Gewicht je Pflanze durch den Zusatz von Propionsäure und Acrylsäure wesentlich gesenkt wurde. Beim Honiggras wurden sowohl die Stückzahl als auch das Gewicht je Pflanze spürbar verringert. Die deutliche Verringerung der Pflanzengewichte zeigt, dass durch die Kombination aus Allylalkohol, Propionsäure und Acrylsäure neben der Keimhemmung auch das Wachstum der Moorpflanzen stark gebremst wurde.

Die Erfindung betrifft daher auch eine Kombination von Allylalkohol mit Acrylsäure und/oder Propionsäure zur Gewinnung von Torfprodukten in unkrautfreier Form. Der Allylalkohol wird innerhalb dieser Kombination in Mengen von 0.0005 bis 0,03 ml und bevorzugt von 0,001 ml bis 0,02 ml je Liter Torf eingesetzt; Acrylsäure und/oder Propionsäure werden jeweils in Mengen von 0,0005 bis 0,02 ml und insbesondere von 0,001 bis 0,0125 ml je Liter Torf eingesetzt.

Es hat sich gezeigt, dass sich besonders günstige Ergebnisse erzielen lassen, nämlich eine Vernichtung von etwa 90% Sauerampfer und etwa 80% der übrigen Moorfolgepflanzen, wenn beispielsweise Allylalkohol allein oder in Kombination mit Propionsäure und/oder Acrylsäure geringe Mengen an Nebenmitteln zugesetzt werden. Derartige Nebenmittel können übliche Vorlaufmittel sein. Beispiele hierfür sind die bekannten Vorauflaufmittel sein. Beispiele hierfür sind die bekannten Vorauflaufmittel Äthyl-N,N-di-isobutylthiolcarbamat, Äthyl-N,N-di-n-propylthiolcarbamat und N-(1-Äthylpropyl)-3,4-dimethyl-2,6-dinitrophenol. Bereits ein Zusatz dieser Nebenmittel in sehr geringen Mengen, die bei 2 bis 20% der Herstellervorschrift bzw. der üblicherweise für Vorauflaufzwecke verwendeten Mengen liegen, führt zu dem vorstehenden günstigen Ergebnis. In der Praxis wird jedes einzelne der als Nebenmittel eingesetzten Vorauflauf-Unkrautvernichtungsmittel in Mengen von 0,0001 bis 0,002 ml, bevorzugt 0,0001 bis 0,001 ml pro Liter Torf, mit dem Hauptmittel verwendet.

Um die angestrebte Vernichtung von 90% Sauerampfer sowie 80% der übrigen Moorfolgepflanzen zu erzielen, lassen sich beispielsweise die im folgenden angegebenen Mittelkombinationen formulieren. Dabei enthalten die Mittel zur Behandlung üblicher Torfprodukte zur Zumischung zu je 1 Liter Torf:

0,0005 bis 0,03 ml Allylalkohol zusammen mit einem oder mehreren der folgenden Bestandteile:

0,0005 bis 0,02 ml Acrylsäure
0,0005 bis 0,02 ml Propionsäure
0,0001 bis 0,002 ml Äthyl-N,N-di-isobutylthiolcarbamat
0,0001 bis 0,002 ml Äthyl-N,N-di-n-propylthiolcarbamat
0,0001 bis 0,002 ml N-(1-Äthylpropyl)-3,4-dimethyl-2,6-dinitrophenol.

Eine besonders bevorzugte Mittelkombination ergibt sich aus folgender Tabelle:

| | Wirkstoffe | Wirksamer Bereich in ml/l Torf | Benötigte Menge in % der empfohlenen Menge |
|---|---|---|---|
| Hauptmittel | Allylalkohol, gegebenenfalls zusammen mit einem oder mehreren der folgenden Wirkstoffe: | 0,001–0,02 | 4%–10% |
| | Acrylsäure | 0,001–0,0125 | – |
| | Propionsäure | 0,001–0,0125 | – |
| Nebenmittel | (Äthyl-N,N-di-isobutylthiolcarbamat | 0,0001–0,001 | 2%–20% |
| | (Äthyl-N,N-di-n-propylthiolcarbamat | 0,0001–0,001 | 1,3%–13% |
| | (N-(1-Äthylpropyl)-3,4-dimethyl-2,6-dinitrophenol | 0,0001–0,001 | 1,7%–17% |

Basis der letzten Spalte der Tabelle sind die in den Anwendungsempfehlungen der Hersteller für die von der BBA (Biologische Bundesanstalt) zugelassenen Pflanzenschutzmittel. Durch die erfindungsgemässe Kombination der Haupt- und Nebenmittel konnte die Konzentration der Wirkstoffe weit unter den empfohlenen Mengen bleiben, wodurch nicht nur die Kosten gesenkt wurden, sondern auch eine deutlich umweltfreundlichere Anwendung erfolgen konnte.

Durch die erfindungsgemässe Verfahrensweise und die erfindungsgemässen Mittel wurde es somit möglich, eine etwa 90%ige Vernichtung von Sauerampfer und eine etwa 80%ige Vernichtung der übrigen Moorfolgepflanzen, insbesondere von Honiggras, zu erreichen. Kulturpflanzen werden durch den Einsatz der erfindungsgemässen Mittel nicht geschädigt.

Zudem hat sich gezeigt, dass die Karenzzeit von der Zugabe der Mittel bis zu Anwendung als Kultursubstat um etwa 24 Stunden liegt. Bei der Anwendung der erfindungsgemässen Mittel im Torfwerk wird zudem eine Gefährdung der dort arbeitenden Menschen vermieden. Die eingesetzten Mittel sind ausserdem nicht persistent und werden in derart geringen Mengen verwendet, so dass sie nicht zu Umweltbelastungen führen.

Die folgenden Beispiele dienen zur weiteren Erläuterung der Erfindung. Mit den in den Beispielen formulierten Mitteln wurden die Samen von Sauerampfer zu etwa 90%, die Samen anderer Moorpflanzen zu etwa 80% vernichtet.

Beispiel 1

300 l schwach zersetzter Hochmoortorf mit einem starken Gehalt an Samen von Sauerampfer, Honiggras und anderen ein- und zweiblättrigen Pflanzen werden in den Torfmischer gegeben und folgende Mittel gründlich eingemischt:

2,8 ml Allylalkohol
2,8 ml Propionsäure
1,8 ml Acrylsäure
0,2 ml Äthyl-N,N-di-isobutylthiolcarbamat
0,2 ml Äthyl-N,N-di-n-propylthiolcabamat
0,2 ml N-(1-Äthylpropyl)-3,4-dimehtyl-2,6-dinitrophenol

Anschliessend wird die Mischung wie üblich in Folienbeutel verpackt. Nah 24 Stunden Lagerung kann das Gemisch als Grundstoff für gärtnerische Erden verwendet werden.

Beispiel 2

80 l eines Gemenges von schwach und stark zersetztem Hochmoortorf mit einem starken Gehalt an Samen von Sauerampfer — während der Befall anderer Samen gering ist – wird in den Torfmischer gegeben und folgende Mittel gründlich eingemischt:

1,2 ml Allylalkohol
1,0 ml Propionsäure
0,04 ml Äthyl-N,N,di-isobutylthiolcarbamat
0,04 ml N-(1-Äthylpropyl)-3,4-dimethyl-2,6-dinitrophenol

Anschliessend wird die Mischung wie üblich in Folienbeutel verpackt. Nach 24 Stunden Lagerung kann das Gemisch als Grundstoff für gärtnerische Erden verwendet werden.

Beispiel 3

110 l stärker zersetzter Hochmoortorf mit geringem Gehalt an Samen von Sauerampfer wird in den Torfmischer gegeben und folgende Mittel gründlich eingemischt:

0,6 ml Allylalkohol
0,03 ml Äthyl-N,N-di-n-propylthiolcabamat
0,03 ml N-(1-Äthylpropyl)-3,4-dimethyl-2,6-dinitrophenol

Anschliessend wird die Mischung wie üblich in Folienbeutel verpackt. Nach 24 Stunden Lagerung kann das Gemisch als Grundstoff für gärtnerische Erden verwendet werden.

**Patentansprüche**

1. Verfahren zur Gewinnung von üblichen Torfprodukten in unkrautfreier Form, wobei man dem losen Torf während der Mischung eine oder mehrere organische sauerstoffhaltige Verbindungen mit drei Kohlenstoffatomen, die eine ungesättigte Kohlenstoff-Kohlenstoff-Bindung enthalten können, zumischt, dadurch gekennzeichnet, dass man als organische sauerstoffhaltige Verbindung mit drei Kohlenstoffatomen Allylalkohol zumischt.

2. Verfahren nach Anspruch 1, dadurch gekennzeichnet, dass man neben Allylalkohol Acrylsäure und/oder Propionsäure zumischt.

3. Verfahren nach Anspruch 1 oder 2, dadurch gekennzeichnet, dass man Allylalkohol in einer Menge von 0,0005 bis 0,03 ml je Liter losem Torf zumischt.

4. Verfahren nach Anspruch 3, dadurch gekennzeichnet, dass man 0,0005 bis 0,03 ml Allylalkohol und zusätzlich 0,0005 bis 0,02 ml Acrylsäure und/oder 0,0005 bis 0,02 ml Propionsäure je Liter Torf zumischt.

5. Verfahren nach einem der Ansprüche 1 bis 4, dadurch gekennzeichnet, dass man zusätzlich zu der oder den organischen sauerstoffhaltigen Verbindung(en) mit drei Kohlenstoffatomen bis zu drei übliche Vorauflauf-Unkrautbekämpfungsmittel in einer Konzentration zwischen 2 und 20% der üblicherweise verwendeten Menge zumischt.

6. Verfahren nach Anspruch 5, dadurch gekennzeichnet, dass man als übliches Vorauflauf-Unkrautbekämpfungsmittel Äthyl-N,N-di-isobutylthiolcarbamat und/oder Äthyl-N,N-di-n-propylthiolcarbamat und/oder N-(1-Äthylpropyl)-3,4-dimethyl-2,6-dinitroanilin pro Komponente jeweils in Mengen von 0,0001 bis 0,002 ml je Liter losem Torf zumischt.

7. Mittel zur Behandlung von üblichen Torfprodukten, das zur Zumischung zu je 1 Liter Torf enthält: 0,0005 bis 0,03 ml Allylakohol zusammen mit einem oder mehreren der folgenden Bestandteile:

0,0005 bis 0,02 ml Acrylsäure,
0,0005 bis 0,02 ml Propionsäure,
0,0001 bis 0,002 ml Äthyl-N,N-di-isobutylthiocarbamat
0,0001 bis 0,002 ml Äthyl-N,N-di-n-propylthiolcarbamat
0,0001 bis 0,002 ml N-(1-Äthylpropyl)-3,4-dimethyl-2,6-dinitroanilin

**Claims**

1. Method for producing normal peat products in weed-free form, in which case during mixing one adds to the loose peat one or more organic oxygen-containing compounds with three carbon atoms, which may contain an unsaturated carbon-carbon bond, characterised in that allyl alcohol is added as an organic oxygen-containing compound with three carbon atoms.

2. Method according to Claim 1, characterised in that in addition to allyl alcohol, acrylic acid and/or propionic acid are also added.

3. Method according to Claim 1 or 2, characterised in that allyl alcohol in a quantity of 0.0005 to 0,03 ml per litre loose peat is added.

4. Method according to Claim 3, characterised in that 0.0005 to 0.03 ml allyl alcohol and additionally 0.0005 to 0.02 ml acrylic acid and/or 0.0005 to 0.02 ml propionic acid are added per litre of peat.

5. Method according to one of Claims 1 to 4, characterised in that in addition to the organic oxygen-containing compound or compounds with three carbon atoms, up to three normal pre-emergence weed killers in a concentration of between 2 and 20% of the quantity normally used are added.

6. Method according to Claim 5, characterised in that as the normal pre-emergence weed killer, ethyl N,N-di isobutylthiolcarbamate and/or ethyl N,N-di-n-propylthiolcarbamate and/or N-(1-ethylpropyl)-3, 4-dimethyl-2,6-dinitroaniline per compound is added in quantities of 0.0001 to 0.002 ml per litre of loose peat.

7. Means for the treatment of normal peat products, which for mixing with 1 litre of peat contain: 0.0005 to 0.03 ml allyl alcohol together with one or more of the following ingredients:

0.0005 to 0.02 ml acrylic acid,
0.0005 to 0.02 ml propionic acid,
0.0001 to 0.002 ml ethyl N,N-di-isobutylthiolcarbamate,
0.0001 to 0.002 ml ethyl N,N-di-n-propylthiolcarbamate,
0.0001 to 0.002 ml N-(1-ethylpropyl)-3,4-dimethyl-2,6-dinitroaniline.

## Revendications

1. Procédé de préparation de produits de la tourbe courants sous une forme exempte de mauvaises herbes, dans lequel, pendant le mélange, on ajoute à la tourbe non cohérente un ou plusieurs composés organiques oxygénés à trois atomes de carbone, qui peuvent comporter une liaison carbone-carbone insaturée, caractérisé en ce qu'on ajoute de l'alcool allylique comme composé organique oxygéné à trois atomes de carbone.

2. Procédé suivant la revendication 1, caractérisé en ce qu'on ajoute, outre l'alcool allylique, de l'acide acrylique et/ou de l'acide propionique.

3. Procédé suivant l'une ou l'autre des revendications 1 et 2, caractérisé en ce qu'on ajoute l'alcool allylique en une quantité de 0,0005 à 0,03 ml par litre de tourbe non cohérente.

4. Procédé suivant la revendication 3, caractérisé en ce que, par litre de tourbe, on ajoute 0,0005 à 0,03 ml d'alcool allylique et en supplément 0,0005 à 0,02 ml d'acide acrylique et/ou 0,0005 à 0,02 ml d'acide propionique.

5. Procédé suivant l'une des revendications 1 à 4, caractérisé en ce que, en supplément au ou aux composés oxygénés organiques à trois atomes de carbone, on ajoute jusqu'à trois agents herbicides en pré-émergence courants en une concentration comprise entre 2 et 20% de la quantité habituellement utilisée.

6. Procédé suivant la revendication 5, caractérisé en ce que, comme agent herbicide en pré-émergence courant, on ajoute du N,N-isobutylthiolcarbamate d'éthyle et/ou du N,N-di-n-propylthiolcarbamate d'éthyle et/ou de la N-(1-éthylpropyl)-3,4-diméthyl-2,6-dinitroaniline, en des quantités de 0,0001 à 0,002 ml par composant et par litre de tourbe non cohérente.

7. Produit pour le traitement de produits de la tourbe courants, qui contient, pour l'addition à chaque fois un litre de tourbe, 0,0005 à 0,03 ml d'alcool allylique conjointement à un ou plusieurs des composants suivants:

0,0005 à 0,02 ml d'acide acrylique
0,0005 à 0,02 ml d'acide propionique
0,0001 à 0,002 ml de N,N-di-isobutylthiolcarbamate d'éthyle
0,0001 à 0,002 ml de N,N-di-n-propylthiolcarbamate d'éthyle
0,0001 à 0,002 ml de N-(1-éthylpropyl)-3,4-diméthyl-2,6-dinitroaniline.